# EUROPEAN PATENT SPECIFICATION

(11) **EP 4 494 950 B1**
(45) Date of publication and mention of the grant of the patent: **03.12.2025**
(21) Application number: 23187085.8
(22) Date of filing: 21.07.2023
(51) Int. Cl.: B60S 1/38, B60S 1/40

(54) **BONELESS WIPER STRUCTURE**
KNOCHENLOSE WISCHERSTRUKTUR
STRUCTURE D'ESSUYAGE SANS OS

(43) Date of publication of application: 22.01.2025
(73) Proprietor: Danyang UPC Auto Parts Co., Ltd., 22069 Zhenjiang Jiangsu (CN)
(72) Inventor: CHANG, Chuan-Chih, 22069 New Taipei City (TW); CHANG, Che-Wei, 22069 New Taipei City (TW); YANG, Cheng-Kai, 22069 New Taipei City (TW)
(74) Representative: 2K Patentanwälte Blasberg Kewitz & Reichel

(56) References cited:
- EP-A1- 2 450 244
- CN-A- 105 253 107
- US-A1- 2015 013 094
- US-A1- 2015 074 935

## Description

### BACKGROUND OF THE INVENTION

### Technical Field

The present disclosure relates to a wiper structure and in particular to a boneless wiper structure for a wiper arm.

### Description of Related Art

Boneless windshield wipers eliminate the drawbacks of related-art wipers by omitting metal frames, which enables wiper blades to have uniform force distribution. This results in evenly distributed pressure and enables the wiper blade to stably contact a vehicle's windshield glass.

However, with modern trends toward simple assembly and wide applicability, wiper manufacturers aim to reduce assembly components and secure boneless wipers onto various types of wiper arms.

US 2015/074935 A1 discloses a boneless wiper structure for a wiper arm according to the preamble of claim 1. A fixing base comprising two opposite transverse ribs accommodated in the containing groove of the joint base and comprises two opposite transverse grooves defined on a bottom of the joint base with the two transverse ribs being engaged with the two transverse grooves are not disclosed.

### SUMMARY OF THE INVENTION

It is an object of the present invention to provide a boneless wiper structure enabling a better and easier positioning, in particular with less or even without positioning elements, and having a configuration with reduced assembly components.

This problem is solved by a boneless wiper structure as claimed in claim 1. Further advantageous embodiments are the subject-matter of the dependent claims.

According to the present disclosure there is provided a boneless wiper structure for a wiper arm comprising: a wiper blade comprising two positioning holes defined on a middle portion thereof opposite to each other, i.e. on a left side and a right side thereof; and a connection base assembly. The connection base assembly comprises: a fixing base assembled to the wiper blade, wherein two positioning feet extend from a bottom of the fixing base and are engaged with the two positioning holes, and a top of the fixing base is provided with a containing groove and a first engagement groove and a second engagement groove arranged on a front side and a rear side of the containing groove; and a joint base engaged with the containing groove, wherein a block extends from one end of the joint base and is engaged with the first engagement groove, an elastic fastening arm extends from another end of the joint base and is engaged with the second engagement groove, a recessed groove is defined on a top of the j oint base, and one end of the wiper arm is accommodated in the recessed groove and is pivotally connected to the joint base.

According to the present disclosure, the fixing base comprises two transverse ribs accommodated in the containing groove and arranged opposite to each other, wherein the joint base comprises two transverse grooves defined on a bottom thereof opposite to each other, and the two transverse ribs are engaged with the two transverse grooves.

Accordingly, the fixing base is directly positioned in the middle of the wiper blade. Compared with related-art techniques, the boneless wiper structure of the present disclosure omits positioning elements. Therefore, the present disclosure has the advantage of reducing assembly components.

The boneless wiper structure of the present disclosure has an advantage of reducing assembly components.

### BRIEF DESCRIPTION OF THE DRAWINGS

FIG. 1 is a perspective exploded view of a boneless wiper structure of the present disclosure.
FIG. 2 is a perspective exploded view illustrating a wiper blade, a connection base assembly, and a connecting element of the present disclosure.
FIG. 3 is a perspective exploded view illustrating the connection base assembly and the connecting element of the present disclosure.
FIG. 4 is a perspective exploded view illustrating the connection base assembly and the connecting element of the present disclosure.
FIG. 5 is a perspective exploded view illustrating an end protection cover and the wiper blade of the present disclosure.
FIG. 6 is a partially cross-sectional view of the boneless wiper structure of the present disclosure.
FIG. 7 is another partially cross-sectional view of the boneless wiper structure of the present disclosure.
FIG. 8 is a perspective exploded view illustrating the boneless wiper structure according to another embodiment of the present disclosure.

### DETAILED DESCRIPTION

The technical solution of the present disclosure is detailed below with reference to accompanying drawings. However, the accompanying drawings are only for illustration purposes and are not intended to limit the present disclosure.

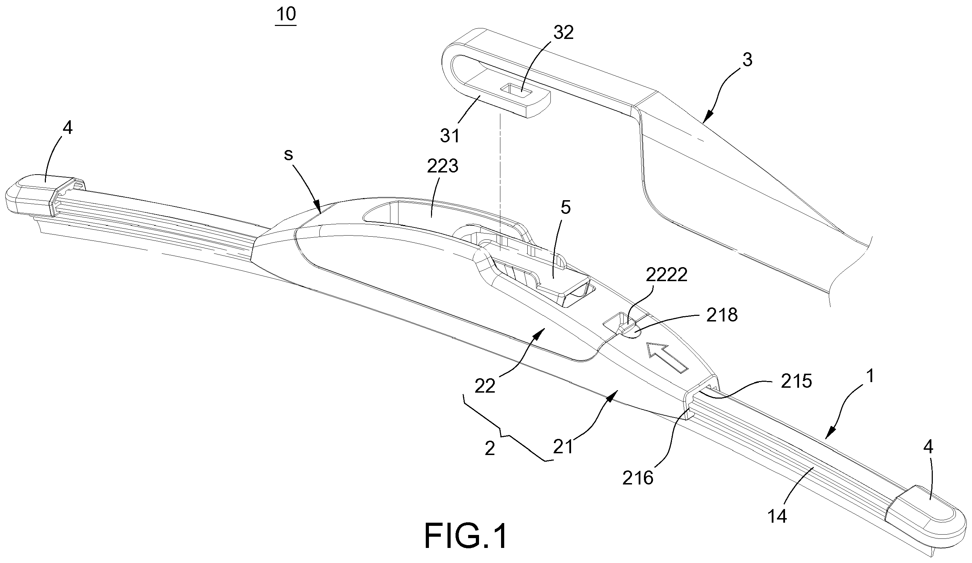

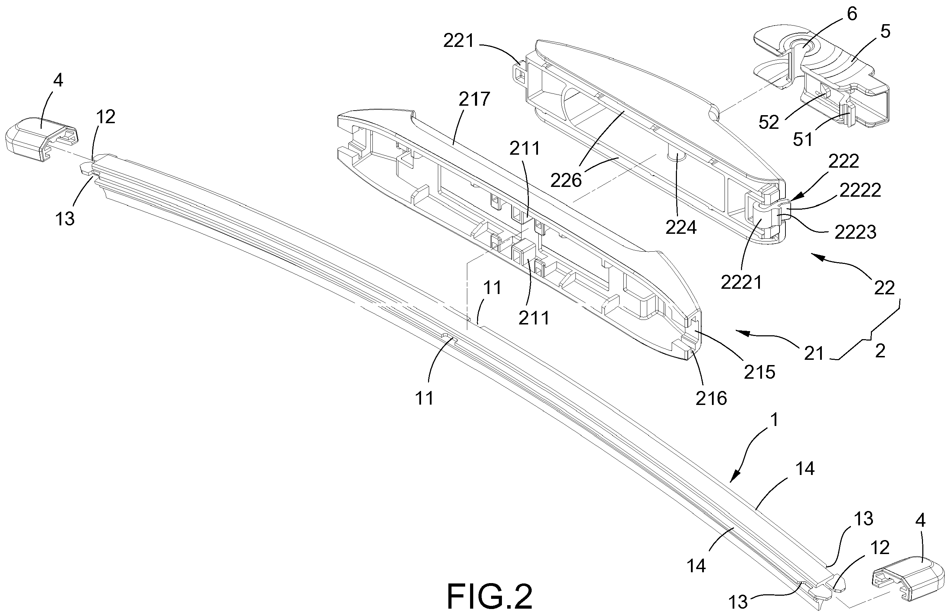

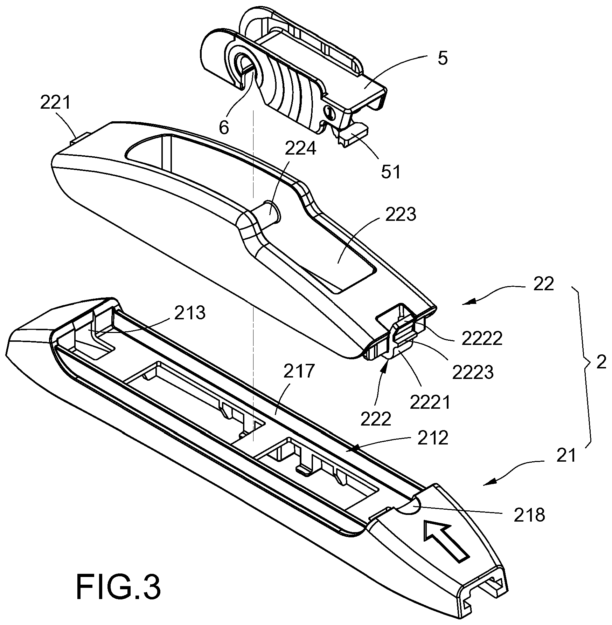

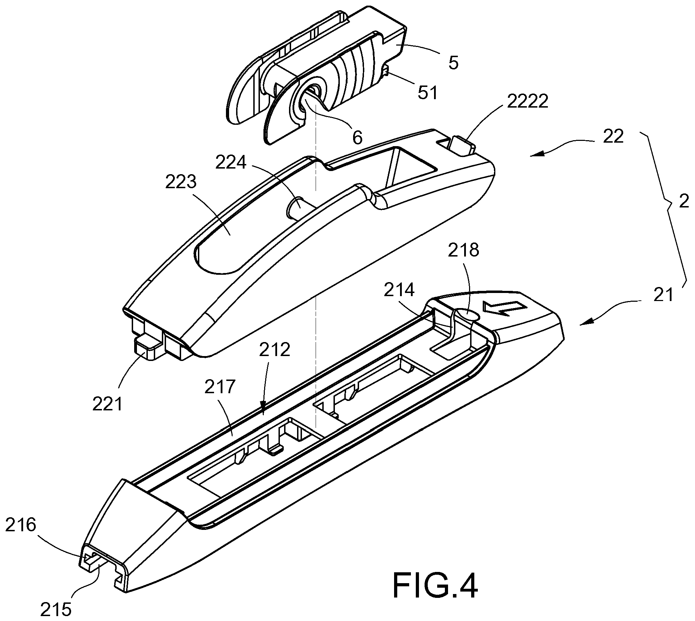

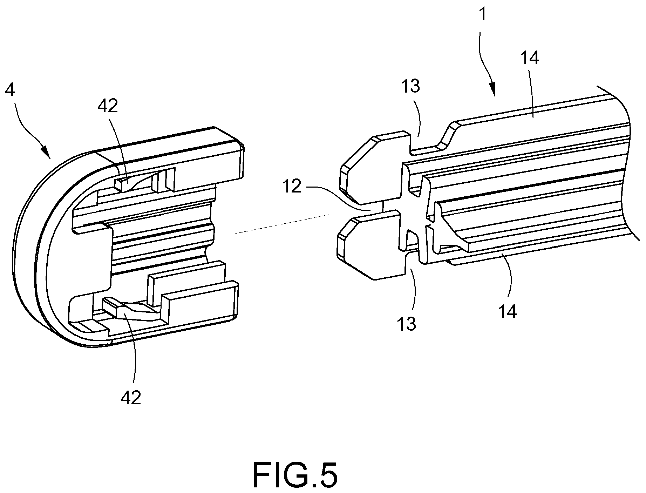

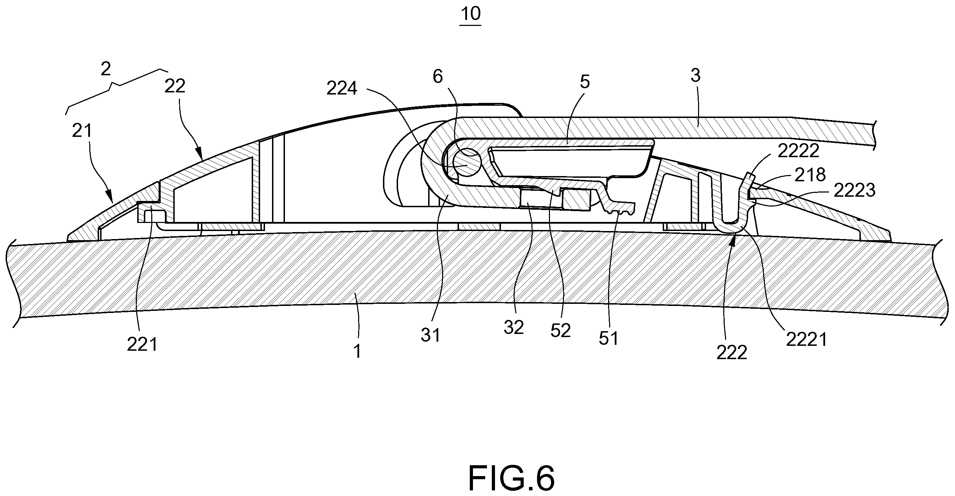

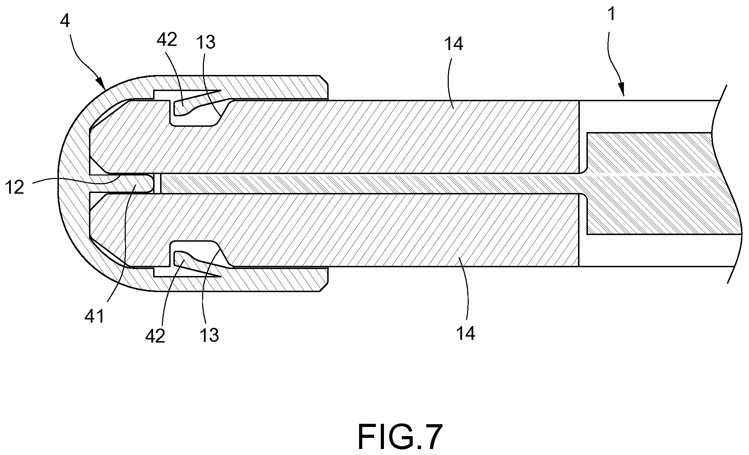

Please refer to Figs. 1 to 7. The present disclosure provides a boneless wiper structure for a wiper arm 3. The boneless wiper structure 10 mainly includes a wiper blade 1 and a connection base assembly 2.

As shown in Figs. 1, 2 and Figs. 5 to 7, the wiper blade 1 is provided with two positioning holes 11 disposed on the middle portion and arranged opposite to each other on the left and right. In the present embodiment, the two positioning holes 11 are two through holes recessed inward from left and right sides of the wiper blade 1. The present disclosure is not limited in this regard.

In addition, an outer periphery of each end of the wiper blade 1 is provided with a strip groove 12 and two notches 13 arranged on left and right sides of the strip groove 12. Two protruding bars 14 extend from the left and right sides of the wiper blade 1.

As shown in Figs. 1 to 7, the connection base assembly 2 includes a fixing base 21 and a joint base 22. The fixing base 21 is assembled to the wiper blade 1. Two positioning feet 211 extend from a bottom of the fixing base 21 to be engaged with the two positioning holes 11. A top of the fixing base 21 is provided with a containing groove 212, and a first engagement groove 213 and a second engagement groove 214 arranged on a front side and a rear side of the containing groove 212.

A through indentation 215 is defined on the bottom of the fixing base and penetrates through a front side and a rear side of the fixing base 21. An inner surface of the through indentation 215 is provided with two trenches 216 arranged on opposite sides. The wiper blade 1 is inserted in the through indentation 215, and the two protruding bars 14 are engaged with the two trenches 216, so that the wiper blade 1 is firmly engaged with the bottom of the fixing base 21. The fixing base 21 extends with two transverse ribs 217 accommodated in the containing groove 212 and arranged opposite to each other on left and right sides.

Furthermore, the joint base 22 is engaged with the containing groove 212. A block 221 extends from one end of the joint base 22 and is engaged with the first engagement groove 213. An elastic fastening arm 222 extends from another end of the joint base 22 and is engaged with the second engagement groove 214. A bottom of the joint base 22 is provided with two transverse grooves 226 arranged opposite to each other on left and right sides, and the two transverse ribs 217 are engaged with the two transverse grooves 226, so that the joint base 22 is firmly engaged with the top of the fixing base 21.

In detail, an elastic fastening arm 222 includes an inverted U-shaped spring arm 2221, a triggerable end 2222 disposed at an end of the inverted U-shaped spring arm, and a latch 2223 protruding from the inverted U-shaped spring arm 2221. The latch 2223 is engaged with the second engagement groove 214. Therefore, the triggerable end 2222 may be triggered (pulled) to remove the latch 2223 from the second engagement groove 214, so as to disengage the joint base 22 from the fixing base 21.

A recessed groove 223 is defined on a top of the joint base 22. The joint base 22 has a pivot shaft 224 crossing from a left inner wall to a right inner wall of the recessed groove 223. A top of the fixing base 21 is provided with a cavity 218 defined at an edge of the containing groove 212 and arranged corresponding to the triggerable end 2222.

A surface of the fixing base 21 and a surface of the joint base 22 are smoothly connected to each other to form a continuous smooth surface s. That is to say, a junction of the fixing base 21 and the joint base 22 is a smooth and non-step surface, and the continuous smooth surface s may guide rainwater to slide down to avoid accumulation of rainwater.

Referring to Figs. 1, 2, 5, and 7, the boneless wiper structure 10 further includes two end protection covers 4. The two-end protection covers 4 sheathe two ends of the wiper blade 1 to enhance structural strength of the ends of the wiper blade 1.

Furthermore, each of the end protection covers includes a straight rib 41 extending internally and two flexible hooks 42 disposed on left and right sides of the straight rib 41. A spacing between the two flexible hooks 42 reduces in a direction toward the end of the wiper blade 1. Each of the straight ribs 41 is embedded into each of the strip grooves 12, and the two flexible hooks 42 are engaged with the two notches 13 respectively, so that each end protection cover 4 is securely installed on each end of the wiper blade 1.

As shown in Figs. 1, 2, 3, 4, and 6, the boneless wiper structure 10 of the present disclosure further includes a connecting element 5. One end of the wiper arm 3 includes a U-shaped bent section 31, the U-shaped bent section 31 is provided with a concave portion 32, the connecting element 5 includes a C-shaped pivot hole 6 and a triggerable tab 51 extending from the connecting element 5, the triggerable tab 51 includes a protruding portion 52, the pivot shaft 224 is pivoted in the C-shaped pivot hole 6, the U-shaped bent section 31 encloses and covers the connecting element 5, and the protruding portion 52 is engaged with the concave portion 32, so that one end of the wiper arm 3 is accommodated in the recessed groove 223 and pivotally connected to the joint base 22.

Moreover, when the triggerable tab 51 is triggered (pulled), the triggerable tab 51 drives the protruding portion 52 to be disengaged from the concave portion 32, so that the wiper arm 3 and the connecting element 5 are detached from each other, and thus the wiper arm 3 may be detached from the joint base 22.

In related-art techniques, a positioning member is installed on the middle of a wiper blade, and a fixing base is assembled with the positioning member, so that the wiper blade is installed on the bottom of the fixing base, and the fixing base is positioned in the middle of the wiper blade.

Figs. 1 to 7 illustrate that the boneless wiper structure 10 of the present disclosure has a use state in which the wiper blade 1 is provided with two positioning holes 11 in the middle and arranged opposite to each other on the left and right, and two positioning feet 211 extend from the bottom of the fixing base 21 to be engaged with the two positioning holes 11, so that the fixing base 21 is securely positioned in the middle of the wiper blade 1. Accordingly, the fixing base 21 may be directly positioned in the middle of the wiper blade 1. Compared with related-art techniques, the present disclosure omits a positioning member. Hence, the boneless wiper structure 10 of the present disclosure has the advantage of reducing the assembly components.

In addition, because the joint base 22 and the fixing base 21 of the connection base assembly 2 are two separate components, users may change the joint base 22 or may choose the connecting element 5 according to a type of the wiper arm 3, so as to enable the boneless wiper structure 10 of the present disclosure to be securely fastened to various types of wiper arms 3.

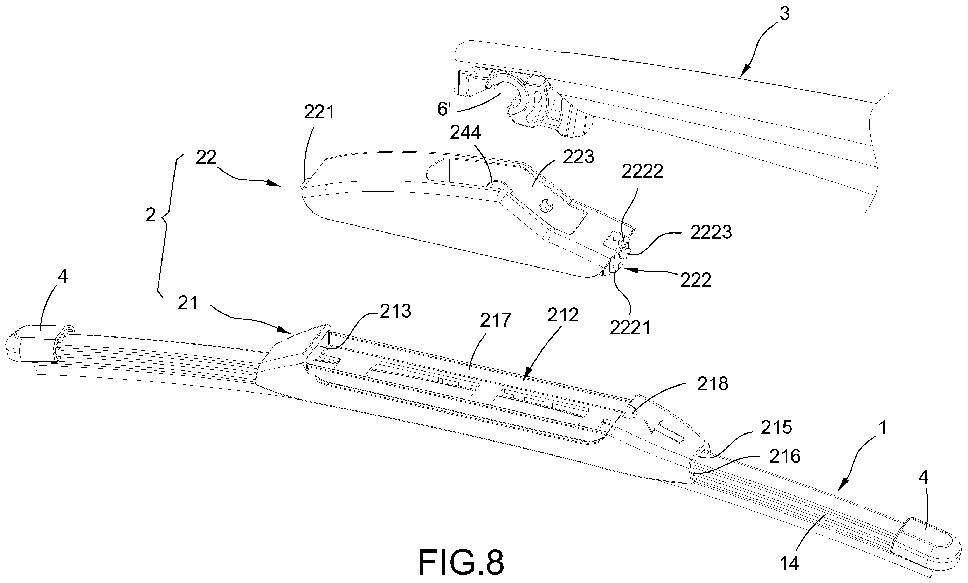

Please refer to FIG. 8, which shows the boneless wiper structure 10 according to another embodiment of the present disclosure. The embodiment of FIG. 8 is substantially the same as the embodiment of Figs. 1 to 7. The embodiment of FIG. 8 is different from the embodiment of Figs. 1 to 7 in that the C-shaped pivot hole 6' is open on one end of the wiper arm 3, and the pivot shaft 224 is pivotally connected to the C-shaped pivot hole 6' of the wiper arm 3, so that one end of the wiper arm 3 is accommodated in the recessed groove 223 and pivotally connected to the joint base 22.

## Claims

1. A boneless wiper structure (10) for a wiper arm (3) comprising:
a wiper blade (1) comprising two positioning holes (11) defined on a middle portion thereof opposite to each other; and
a connection base assembly (2);
said connection base assembly (2) comprising:
a fixing base (21) assembled to the wiper blade (1) and comprising two positioning feet (211) extended from a bottom thereof and engaged with the two positioning holes (11), a containing groove (212) defined on a top of the fixing base (21), and a first engagement groove (213) and a second engagement groove (214) arranged on a front side and a rear side of the containing groove (212); and
a joint base (22) engaged with the containing groove (212) and comprising a block (221) extended from one end of the joint base (22) and engaged with the first engagement groove (213), an elastic fastening arm (222) extended from another end of the joint base (22) and engaged with the second engagement groove (214), and a recessed groove (223) defined on a top of the joint base (22), wherein one end of the wiper arm (3) is accommodated in the recessed groove (223) and pivotally connected to the joint base (22);
**characterized in that**
the fixing base (21) comprises two transverse ribs (217) accommodated in the containing groove (212) and arranged opposite to each other, the joint base (22) comprises two transverse grooves (226) defined on a bottom thereof opposite to each other, and the two transverse ribs (217) are engaged with the two transverse grooves (226).

2. The boneless wiper structure according to claim 1, further comprising two end protection covers (4) adapted to sheathe two ends of the wiper blade (1).

3. The boneless wiper structure according to claim 2, wherein the wiper blade (1) comprises a strip groove (12) defined on an outer periphery of an end thereof and two notches (13) arranged on opposite sides of the strip groove (12), each of the end protection covers (4) comprises a straight rib (41) extended inside and two flexible hooks (42) disposed on opposite sides of the straight rib (41), a spacing between the two flexible hooks (42) gradually reduces in a direction toward the end of the wiper blade (1), the straight rib (41) is embedded in the strip groove (12), and the two flexible hooks (42) are engaged with the two notches (13) respectively.

4. The boneless wiper structure according to any of the preceding claims, wherein the wiper blade (1) comprises two protruding bars (14) extended from opposite sides thereof, the fixing base (21) comprises a through indentation (215) defined on the bottom thereof and penetrating through a front side and a rear side thereof, two trenches (216) are oppositely defined on an inner surface of the through indentation (215) , the wiper blade (1) is inserted in the through indentation (215), and the two protruding bars (14) are engaged with the two trenches (216).

5. The boneless wiper structure according to any of the preceding claims, wherein the two positioning holes (11) are two through holes recessed inward from two sides of the wiper blade (1).

6. The boneless wiper structure according to any of the preceding claims, wherein the elastic fastening arm (222) comprises an inverted U-shaped spring arm (2221), a triggerable end (2222) disposed on an end of the inverted U-shaped spring arm (2221), and a latch (2223) protruding from the inverted U-shaped spring arm (2221), the latch (2223) is engaged with the second engagement groove (214), and the fixing base (21) comprises a cavity (218) defined on a top thereof and located at an edge of the containing groove (212) corresponding to the triggerable end (2222).

7. The boneless wiper structure according to any of the preceding claims, wherein a surface of the fixing base (21) and a surface of the joint base (22) are connected to each other in a continuous smooth surface (s) manner.

8. The boneless wiper structure according to any of the preceding claims, further comprising a connecting element (5), wherein the joint base (22) comprises a pivot shaft (224) crossing opposite inner walls of the recessed groove (223), the wiper arm (3) comprises a U-shaped bent section (31) disposed on one end thereof, the U-shaped bent section (31) comprises a concave portion (32), the connecting element (5) comprises a C-shaped pivot hole (6) and a triggerable tab (51) extended therefrom, the triggerable tab (51) comprises a protruding portion (52), the pivot shaft (224) is connected pivotally with the C-shaped pivot hole (6), the U-shaped bent section (31) is adapted to sheathe the connecting element (5), and the protruding portion (52) is engaged with the concave portion (32).

9. The boneless wiper structure according to any of the preceding claims, wherein the joint base (22) comprises a pivot shaft (224) crossing opposite inner walls of the recessed groove (223), the wiper arm (3) comprises a C-shaped pivot hole (6') disposed on one end thereof, and the pivot shaft (224) is pivotally connected to the C-shaped pivot hole (6').

## Patentansprüche

1. Rahmenlose Scheibenwischeranordnung(10) für einen Scheibenwischerarm (3), umfassend:
ein Wischerblatt (1) mit zwei Positionierungslöchern (11), die an einem mittleren Abschnitt desselben einander gegenüberliegend definiert sind; und
eine Gelenkbasis-Baugruppe (2);
wobei die Gelenkbasis-Baugruppe (2) umfasst:
eine Befestigungsbasis (21), die an dem Wischerblatt (1) angebracht ist und zwei Positionierungsfüße (211) umfasst, die sich ausgehend von einer Unterseite derselben erstrecken und in die beiden Positionierungslöcher (11) eingreifen, eine Aufnahmenut (212), die an einer Oberseite der Befestigungsbasis (21) ausgebildet ist, und eine erste Eingriffsnut (213) und eine zweite Eingriffsnut (214), die an einer Vorderseite und einer Rückseite der Aufnahmenut (212) angeordnet sind; und
eine Gelenkbasis (22), die mit der Aufnahmenut (212) in Eingriff steht und einen Block (221) umfasst, der sich ausgehend von einem Ende der Gelenkbasis (22) erstreckt und mit der ersten Eingriffsnut (213) in Eingriff steht, einen elastischen Befestigungsarm (222), der sich ausgehend von einem anderen Ende der Gelenkbasis (22) erstreckt und mit der zweiten Eingriffsnut (214) in Eingriff steht, und eine vertiefte bzw. ausgesparte Nut (223), die an einer Oberseite der Gelenkbasis (22) definiert ist, wobei ein Ende des Scheibenwischerarms (3) in der vertieften bzw. ausgesparten Nut (223) aufgenommen und schwenkbar mit der Gelenkbasis (22) verbunden ist;
**dadurch gekennzeichnet, dass**
die Befestigungsbasis (21) zwei Querrippen (217) umfasst, die in der Aufnahmenut (212) aufgenommen und einander gegenüberliegend angeordnet sind, wobei die Gelenkbasis (22) zwei Querrillen (226) umfasst, die an einer Unterseite davon einander gegenüberliegend definiert sind, und die beiden Querrippen (217) mit den beiden Querrillen (226) in Eingriff stehen.

2. Rahmenlose Scheibenwischeranordnung nach Anspruch 1, die ferner zwei Endschutzabdeckungen (4) umfasst, die dazu ausgelegt sind, zwei Enden des Wischerblatts (1) abzudecken.

3. Rahmenlose Scheibenwischeranordnung nach Anspruch 2, wobei das Wischerblatt (1) eine streifenförmige Nut (12) aufweist, die an einem Außenumfang eines Endes davon ausgebildet ist, und zwei Kerben (13) aufweist, die auf gegenüberliegenden Seiten der streifenförmigen Nut (12) angeordnet sind, wobei jede der Endschutzabdeckungen (4) eine gerade Rippe (41) aufweist, die sich nach innen erstreckt, und zwei flexible Haken (42) aufweist, die auf gegenüberliegenden Seiten der geraden Rippe (41) angeordnet sind, wobei ein Abstand zwischen den beiden flexiblen Haken (42) in Richtung zum Ende des Wischerblatts (1) allmählich abnimmt, die gerade Rippe (41) in die streifenförmige Nut (12) eingebettet ist und die beiden flexiblen Haken (42) jeweils mit den beiden Kerben (13) in Eingriff stehen.

4. Rahmenlose Wischerkonstruktion gemäß einem der vorstehenden Ansprüche, wobei das Wischerblatt (1) zwei hervorstehende Stäbe (14) umfasst, die sich von gegenüberliegenden Seiten davon erstrecken, die Befestigungsbasis (21) eine durchgehende Vertiefung (215) umfasst, die an ihrer Unterseite definiert ist und durch eine Vorderseite und eine Rückseite davon hindurchgeht, zwei Gräben (216) an einer Innenfläche der durchgehenden Vertiefung (215) gegenüberliegend ausgebildet sind, das Wischerblatt (1) in die durchgehende Vertiefung (215) eingesetzt ist und die beiden vorstehenden Stäbe (14) mit den beiden Gräben (216) in Eingriff stehen.

5. Rahmenlose Scheibenwischeranordnung nach einem der vorstehenden Ansprüche, wobei die beiden Positionierungslöcher (11) als zwei Durchgangslöcher ausgebildet sind, die von zwei Seiten des Wischerblatts (1) nach innen vertieft sind.

6. Rahmenlose Scheibenwischeranordnung nach einem der vorhergehenden Ansprüche, wobei der elastische Befestigungsarm (222) einen umgekehrt U-förmigen Federarm (2221), ein auslösbares Ende (2222), das an einem Ende des umgekehrt U-förmigen Federarms (2221) angeordnet ist, und eine Verriegelung (2223) umfasst, die aus dem umgekehrt U-förmigen Federarm (2221) hervorsteht, wobei die Verriegelung (2223) in die zweite Eingriffsnut (214) eingreift und die Befestigungsbasis (21) einen Hohlraum (218) aufweist, der an ihrer Oberseite definiert ist und an einer Kante der Aufnahmenut (212) entsprechend dem auslösbaren Ende (2222) angeordnet ist.

7. Rahmenlose Wischerstruktur nach einem der vorhergehenden Ansprüche, wobei eine Oberfläche der Befestigungsbasis (21) und eine Oberfläche der Gelenkbasis (22) in einer durchgehend glatt ausgebildeten Oberfläche (s) miteinander verbunden sind.

8. Rahmenlose Scheibenwischeranordnung nach einem der vorhergehenden Ansprüche, ferner umfassend ein Verbindungselement (5), wobei die Gelenkbasis (22) eine Schwenkachse (224) aufweist, die gegenüberliegende Innenwände der Aussparungsnut (223) kreuzt, der Scheibenwischerarm (3) einen an seinem einen Ende angeordneten U-förmig gebogenen Abschnitt (31) aufweist, der U-förmig gebogene Abschnitt (31) einen konkaven Abschnitt (32) aufweist, das Verbindungselement (5) ein C-förmiges Drehloch (6) und eine davon ausgehende auslösbare Lasche (51) aufweist, die auslösbare Lasche (51) einen vorstehenden Abschnitt (52) aufweist, die Schwenkachse (224) schwenkbar mit dem C-förmigen Schwenkloch (6) verbunden ist, der U-förmig gebogene Abschnitt (31) so ausgebildet ist, dass er das Verbindungselement (5) ummantelt, und der vorstehende Abschnitt (52) mit dem konkaven Abschnitt (32) in Eingriff steht.

9. Rahmenlose Scheibenwischeranordnung nach einem der vorhergehenden Ansprüche, wobei die Gelenkbasis (22) eine Schwenkachse (224) aufweist, die einander gegenüberliegende Innenwände der vertieften bzw. ausgesparten Nut (223) kreuzt, der Scheibenwischerarm (3) ein C-förmiges Drehloch (6') aufweist, das an einem Ende desselben angeordnet ist, und die Drehachse (224) schwenkbar mit dem C-förmigen Drehloch (6') verbunden ist.

## Revendications

1. Une structure d'essuie-glace sans os (10) pour un bras d'essuie-glace (3) comprenant :
une lame d'essuie-glace (1) comprenant deux trous de positionnement (11) définis sur une partie centrale de celle-ci, opposés l'un à l'autre ; et
un ensemble de base de connexion (2) ;
ledit ensemble de base de connexion (2) comprenant :
une base de fixation (21) assemblée à la lame d'essuie-glace (1) et comprenant deux pieds de positionnement (211) s'étendant depuis une partie inférieure de celle-ci et engagés dans les deux trous de positionnement (11), une rainure de confinement (212) définie sur une partie supérieure de la base de fixation (21), et une première rainure d'engagement (213) et une deuxième rainure d'engagement (214) disposées sur un côté avant et un côté arrière de la rainure de confinement (212) ; et
une base d'articulation (22) engagée dans la rainure de logement (212) et comprenant un bloc (221) s'étendant depuis une extrémité de la base d'articulation (22) et engagé dans la première rainure d'engagement (213), un bras de fixation élastique (222) s'étendant depuis une autre extrémité de la base d'articulation (22) et engagé dans la deuxième rainure d'engagement (214), et une rainure en retrait (223) définie sur une partie supérieure de la base d'articulation (22), dans laquelle une extrémité du bras d'essuie-glace (3) est logée dans la rainure en retrait (223) et reliée de manière pivotante à la base d'articulation (22) ;
**caractérisée en ce que**
la base de fixation (21) comprend deux nervures transversales (217) logées dans la rainure de confinement (212) et disposées à l'opposé l'une de l'autre, la base d'articulation (22) comprend deux rainures transversales (226) définies sur une partie inférieure de celle-ci à l'opposé l'une de l'autre, et les deux nervures transversales (217) sont engagées avec les deux rainures transversales (226).

2. La structure d'essuie-glace sans os selon la revendication 1, comprenant en outre deux capots de protection d'extrémité (4) adaptés pour recouvrir les deux extrémités de la lame d'essuie-glace (1).

3. La structure d'essuie-glace sans os selon la revendication 2, dans laquelle la lame d'essuie-glace (1) comprend une rainure en bande (12) définie sur une périphérie extérieure d'une extrémité de celle-ci et deux encoches (13) disposées sur des côtés opposés de la rainure en bande (12), chacun des couvercles de protection d'extrémité (4) comprend une nervure droite (41) s'étendant à l'intérieur et deux crochets flexibles (42) disposés sur des côtés opposés de la nervure droite (41), un espacement entre les deux crochets flexibles (42) diminue progressivement dans une direction vers l'extrémité de la lame d'essuie-glace (1), la nervure droite (41) est encastrée dans la rainure en bande (12), et les deux crochets flexibles (42) sont engagés respectivement avec les deux encoches (13).

4. La structure d'essuie-glace sans os selon l'une quelconque des revendications précédentes, dans laquelle la lame d'essuie-glace (1) comprend deux barres saillantes (14) s'étendant à partir de ses côtés opposés, la base de fixation (21) comprend une encoche traversante (215) définie sur sa partie inférieure et traversant ses côtés avant et arrière, deux tranchées (216) sont définies de manière opposée sur une surface intérieure de l'encoche traversante (215), la lame d'essuie-glace (1) est insérée dans l'encoche traversante (215), et les deux barres saillantes (14) sont engagées dans les deux rainures (216).

5. La structure d'essuie-glace sans os selon l'une quelconque des revendications précédentes, dans laquelle les deux trous de positionnement (11) sont deux trous traversants en retrait vers l'intérieur à partir des deux côtés de la lame d'essuie-glace (1).

6. La structure d'essuie-glace sans os selon l'une quelconque des revendications précédentes, dans laquelle le bras de fixation élastique (222) comprend un bras à ressort en forme de U inversé (2221), une extrémité déclenchable (2222) disposée à une extrémité du bras à ressort en forme de U inversé (2221), et un loquet (2223) faisant saillie à partir du bras à ressort en forme de U inversé (2221), le loquet (2223) est engagé dans la deuxième rainure d'engagement (214), et la base de fixation (21) comprend une cavité (218) définie sur une partie supérieure de celle-ci et située au niveau d'un bord de la rainure de confinement (212) correspondant à l'extrémité déclenchable (2222).

7. La structure d'essuie-glace sans os selon l'une quelconque des revendications précédentes, dans laquelle une surface de la base de fixation (21) et une surface de la base d'articulation (22) sont reliées l'une à l'autre de manière à former une surface lisse continue (s).

8. La structure d'essuie-glace sans os selon l'une quelconque des revendications précédentes, comprenant en outre un élément de connexion (5), dans laquelle la base d'articulation (22) comprend un axe de pivotement (224) traversant les parois intérieures opposées de la rainure en retrait (223), le bras d'essuie-glace (3) comprend une section courbée en U (31) disposée à une extrémité de celui-ci, la section courbée en U (31) comprend une partie concave (32), l'élément de connexion (5) comprend un trou de pivotement en forme de C (6) et une languette déclenchable (51) s'étendant à partir de celui-ci, la languette déclenchable (51) comprend une partie saillante (52), l'axe de pivotement (224) est relié de manière pivotante au trou de pivotement en forme de C (6), la section coudée en U (31) est adaptée pour gainer l'élément de connexion (5), et la partie saillante (52) est engagée avec la partie concave (32).

9. La structure d'essuie-glace sans os selon l'une quelconque des revendications précédentes, dans laquelle la base d'articulation (22) comprend un axe de pivotement (224) traversant les parois intérieures opposées de la rainure en retrait (223), le bras d'essuie-glace (3) comprend un trou de pivotement en forme de C (6') disposé à une extrémité de celui-ci, et l'axe de pivotement (224) est relié de manière pivotante au trou de pivotement en forme de C (6').
